# FASCICULE DE BREVET EUROPEEN

(11) **EP 2 594 128 B1**
(45) Date de publication et mention de la délivrance du brevet: **07.01.2015**
(21) Numéro de dépôt: 12306420.6
(22) Date de dépôt: 15.11.2012
(51) Int. Cl.: A01G 3/04, A01G 3/08

(54) **Dispositif d'élagage embarqué**
Eingebaute Ausästungsvorrichtung
On-board pruning device

(30) Priorité: 17.11.2011 FR 1160468
(43) Date de publication de la demande: 22.05.2013
(73) Titulaire: Gres de Thiviers S.a.r.l., 24800 Thiviers (FR)
(72) Inventeur: Pijassou, Jacques, 24800 Thiviers (FR)
(74) Mandataire: Fantin, Laurent

(56) Documents cités:
- EP-A1- 2 225 933
- WO-A1-2011/054060
- FR-A1- 2 546 030
- US-A- 4 063 359
- US-B1- 7 086 435

## Description

La présente invention concerne un dispositif d'élagage embarqué sur un véhicule et destiné aux travaux d'élagage à proximité de lignes électriques suspendues. Parmi les différentes opérations d'entretien du réseau de distribution électrique, l'élagage de la végétation située à proximité des lignes est une opération récurrente et difficile à mener pour diverses raisons.

Tout d'abord, il s'agit d'un travail en hauteur à une dizaine de mètres ou plus et à proximité de conducteurs transportant de l'électricité et constituant un danger mortel pour l'homme.

Par conséquent, et comme exigé par les normes, lorsque les élagueurs suivent une ligne électrique avec un véhicule de type nacelle autoportée pour effectuer leur travail, ils doivent respecter une distance de sécurité minimale par rapport à la ligne électrique connectée au réseau.

En effet, il arrive fréquemment que les travaux d'élagage soient réalisés sans isoler la portion de ligne du réseau électrique.

D'autre part, des lignes électriques suspendues s'étendent sur tout le territoire. Il se trouve donc une multitude d'endroits où des troncs ou des branches sont susceptibles de venir au contact de lignes électriques.

Aussi, des dispositifs spécifiques ont été développés pour permettre un travail d'élagage dans les conditions précitées.

On connaît par exemple le dispositif d'élagage décrit dans la demande internationale WO-2011/054060.

Ce dispositif d'élagage comprend des moyens de coupe montés sur un véhicule par l'intermédiaire de deux bras articulés, le premier bras étant mobile en rotation selon un axe vertical par rapport au véhicule et le deuxième bras étant mobile en rotation selon un axe horizontal par rapport au premier.

Afin d'atteindre une hauteur suffisante, le deuxième bras est télescopique.

Les mouvements des bras sont actionnés hydrauliquement et il est prévu de réaliser un bras en matériau isolant afin de pouvoir élaguer aux abords d'une ligne électrique.

Selon un premier inconvénient, il n'est pas prévu de moyens de mise en mouvement des moyens de coupe par rapport à l'extrémité du deuxième bras télescopique.

Cette mobilité réduite limite le champ d'action des moyens de coupe à une ou quelques branches pour chaque orientation prise par les bras articulés.

De plus, avec un tel montage des moyens de coupe, de nombreuses manoeuvres sont nécessaires pour contourner les lignes électriques, et un travail de coupe dans un plan vertical parallèle aux lignes électriques nécessite un positionnement du véhicule sous les lignes électriques.

Or, ce positionnement du véhicule sous les lignes électriques est potentiellement dangereux et possible uniquement si l'espace situé sous les lignes est bien dégagé et le terrain accessible.

Enfin, les moyens de coupe équipant ce dispositif d'élagage sont de type scie circulaire ou scie à chaîne.

Ces moyens de coupe sont conçus pour travailler branche par branche, et pour couper des branches suffisamment rigides pour ne pas plier et se dérober à l'action de coupe.

Par conséquent, les moyens de coupe de ce dispositif d'élagage ne permettent pas de travailler de manière continue sur un pan de végétation comprenant de petits branchages souples.

Selon un dernier inconvénient, le véhicule sur lequel est monté ce dispositif d'élagage n'est pas particulièrement adapté à des déplacements sur des terrains accidentés.

Aussi, la présente invention vise à pallier les inconvénients de l'art antérieur en proposant un dispositif d'élagage avec des moyens de coupe mobiles, permettant de contourner facilement une ligne électrique, et permettant de travailler de manière continue sur un pan de végétation, qu'il soit composé de petits branchages souples ou de branches plus rigides.

De plus, les moyens de coupe du dispositif d'élagage selon l'invention sont montés par l'intermédiaire d'un bras sur un véhicule porteur capable de se déplacer sur des terrains accidentés.

En vue de remplir les objectifs précités, l'invention a pour objet un dispositif d'élagage comprenant des moyens de coupe de végétation montés par l'intermédiaire d'un bras sur le châssis d'un véhicule, l'extrémité basse du bras est articulée en rotation par rapport au châssis autour d'un axe de rotation, ces moyens de coupe effectuant une taille de la végétation par cisaillement, et des moyens de mise en mouvement étant intercalés entre l'extrémité haute du bras et les moyens de coupe, le dispositif d'élagage étant **caractérisé en ce que**, le bras s'étendant le long d'un axe longitudinal, les moyens de mise en mouvement comprennent un premier support mobile en translation le long d'un premier axe transversal perpendiculaire à l'axe longitudinal du bras et relié à l'extrémité haute du bras.

D'autres caractéristiques et avantages ressortiront de la description qui va suivre de l'invention, description donnée à titre d'exemple uniquement, en regard des dessins annexés sur lesquels :
- la figure 1A est une vue latérale en perspective du dispositif d'élagage selon l'invention,
- la figure 1B est une vue de détail de la figure 1A,
- la figure 2 est une vue de dessus en perspective du dispositif d'élagage selon l'invention,
- la figure 3 est une vue schématique illustrant le champ d'action des moyens de coupe du dispositif d'élagage selon l'invention.

Le dispositif d'élagage 10 selon l'invention permet à une personne seule d'élaguer en sécurité à grande distance, et donc en respectant les distances minimales imposées par les normes, une végétation qui se rapproche trop, ou qui a tendance à trop se rapprocher, de lignes électriques.

Par végétation, l'invention entend des petits troncs d'arbres, des branches ou de petits branchages.

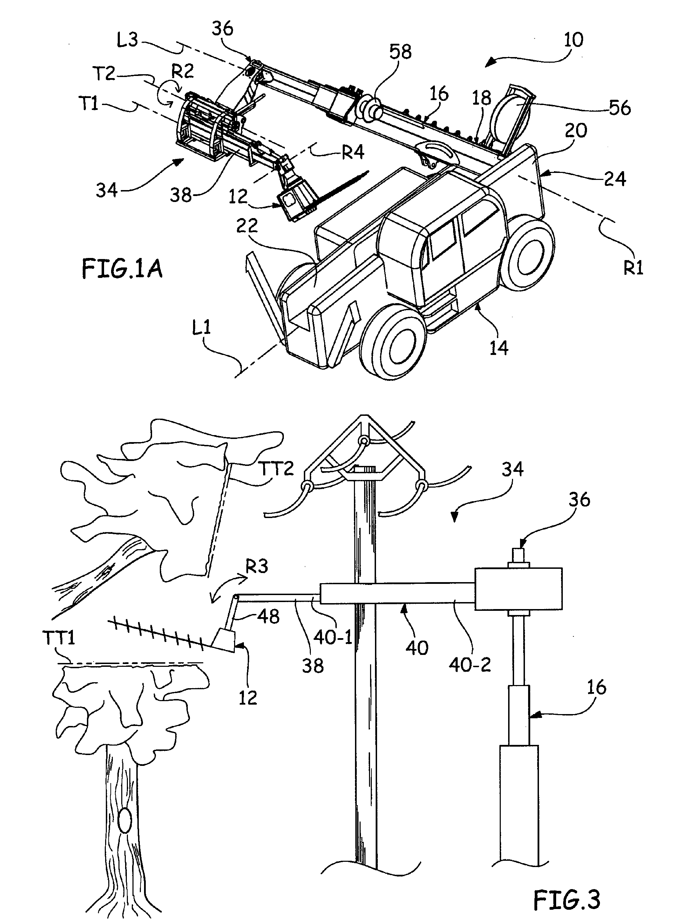

Afin d'élaguer en sécurité à grande distance, et comme illustré en figure 1A, le dispositif d'élagage 10 selon l'invention comprend des moyens de coupe 12 de végétation montés sur le châssis 20 d'un véhicule 14 par l'intermédiaire d'un bras 16 s'étendant le long d'un axe longitudinal L3.

Le bras 16 offre une portée de travail d'au moins 10 mètres, et de préférence de 15 à 17 mètres.

De préférence, ce bras 16 est télescopique pour adapter la hauteur de travail à la hauteur des lignes électriques.

Avantageusement, la variation de longueur du bras 16 permet de limiter les déplacements du véhicule 14 sous les lignes électriques.

En option, et afin d'améliorer les conditions de sécurité, le bras 16 peut être réalisé dans un matériau isolant électriquement.

Le véhicule 14 d'axe longitudinal L1 a un châssis 20 adapté pour recevoir le bras 16 en position repliée.

Par exemple, le châssis 20 peut comporter un support ouvert 22 en U s'étendant le long de l'axe longitudinal L1 du véhicule et positionné de manière centrale afin d'améliorer la stabilité du véhicule avec le bras déployé.

L'extrémité basse 18 du bras 16 est articulée en rotation par rapport au châssis 20 autour d'un axe de rotation R1.

De préférence, l'axe de rotation R1 est perpendiculaire à l'axe longitudinal L1 du véhicule 14.

L'axe de rotation R1 se situe de préférence à l'arrière 24 du châssis 20 du véhicule 14 et du support ouvert 22.

Avantageusement, les moyens de coupe 12 effectuent une taille de la végétation par cisaillement, le cisaillement offrant une coupe avec un rendu plus propre et de meilleure qualité.

A cet effet, ces moyens de coupe 12 prennent la forme de deux lames planes (26,28) superposées le long d'un axe longitudinal L2 et avec un mouvement relatif et alternatif de l'une par rapport à l'autre.

Ainsi, au moins une lame (26,28) est entraînée selon un mouvement de va-et-vient en translation le long de l'axe longitudinal L2, les lames glissant l'une par rapport à l'autre.

Plus en détails, chaque lame plane (26,28) comporte respectivement deux séries ((S1,S2),(S3,S4)) de dents 30, les deux séries ((S1,S2),(S3,S4)) de chaque lame plane (26,28) étant adossées l'une à l'autre, les dents 30 vers l'extérieur.

Chaque lame (26,28) a donc respectivement une première série (S1,S3) d'un côté de l'axe longitudinal L2 et une deuxième série (S2,S4) de l'autre côté de l'axe longitudinal L2, les deux séries ((S1,S2),(S3,S4)) de dents de chaque lame (26,28) étant symétriques par rapport à l'axe longitudinal L2.

Ainsi, les moyens de coupe 12 permettent une taille de la végétation dans deux directions de coupe (C1,C2) opposées et sensiblement perpendiculaires à l'axe longitudinal L2.

Cette conception des lames et leur mouvement relatif et alternatif fait que toute végétation passant entre les dents 30 des lames (26,28) est taillée rapidement et proprement.

Pour donner un ordre d'idées, les lames (26,28) offrent une longueur de taille d'environ 1,25 mètres et comptent treize dents 30 par série (S1,S2,S3,S4), les dents 30 ayant une hauteur d'environ quinze centimètres, une largeur à l'embase d'environ 10 centimètres, et les dents de chaque série étant réparties selon un pas d'environ 16 centimètres.

Avec de telles dimensions, les lames (26,28) permettent de couper d'un seul coup des troncs dont le diamètre peut aller jusqu'à une dizaine de centimètres. Avantageusement, les extrémités 32 des dents 30 sont découpées de façon à permettre une coupe par sciage, ce qui autorise la coupe de troncs dont le diamètre peut aller jusqu'à 15 centimètres.

De préférence, les moyens de coupe 12 sont à énergie hydraulique et à commande électrique.

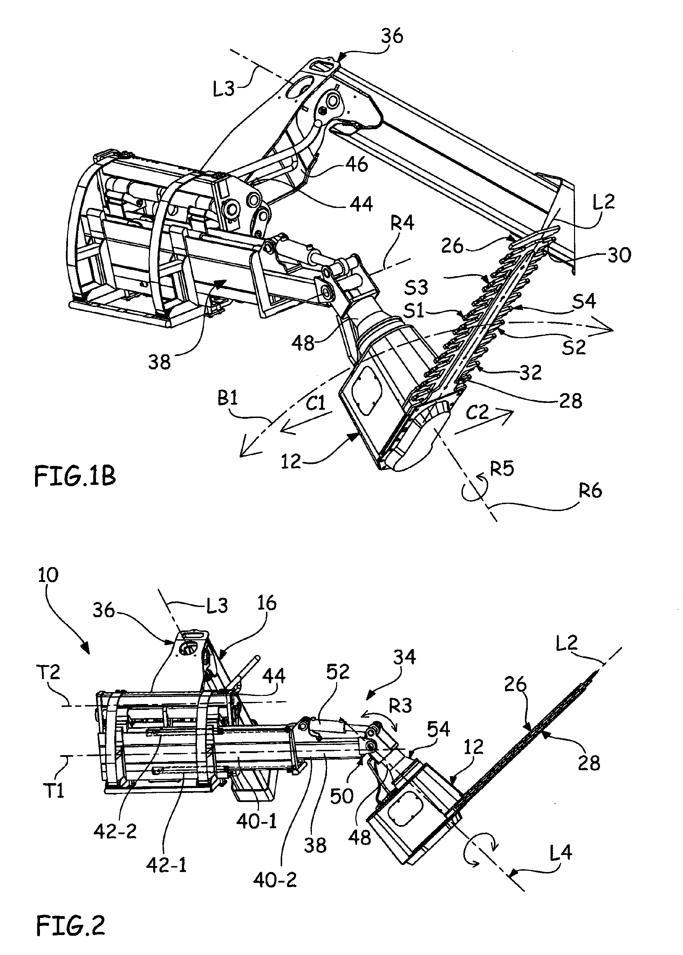

Comme illustré en figure 2, afin d'améliorer la mobilité et le champ d'action des moyens de coupe 12, des moyens de mise en mouvement 34 sont intercalés entre l'extrémité haute 36 du bras 16 et les moyens de coupe 12.

Et comme illustré schématiquement en figure 3, pour déporter les moyens de coupe 12 latéralement et contourner facilement une ligne électrique, les moyens de mise en mouvement 34 comprennent un premier support 38 mobile en translation le long d'un premier axe transversal T1 perpendiculaire à l'axe longitudinal L3 du bras et relié à l'extrémité haute 36 du bras 16.

Le premier support 38 prend la forme d'une glissière 40 entraînée par un actionneur.

De préférence, le premier support 38 prend la forme d'une double glissière (40-1,40-2) actionnée par deux vérins (42-1,42-2), les deux glissières (40-1,40-2) étant montées en série et entraînées respectivement par les vérins (42-1,42-2).

Ce montage en double glissière permet de doubler la course en translation du premier support 38 le long du premier axe transversal T1 et de rigidifier le support 38 lorsqu'il est étendu au maximum.

Ensuite, afin de faciliter le maintien des moyens de coupe 12 dans une même position lorsque l'on fait varier l'inclinaison du bras 16, le premier support 38 est monté mobile en rotation R2 autour d'un deuxième axe transversal T2 perpendiculaire à l'axe longitudinal L3 du bras, le deuxième axe transversal T2 étant parallèle, mais distinct, par rapport au premier axe transversal T1.

A cet effet, le premier support 38 est monté sur un cadre 44 monté à rotation autour du deuxième axe transversal T2 par rapport à une rallonge 46 solidaire de l'extrémité haute 36 du bras 16, un actionneur tel un vérin étant prévu pour mettre le cadre 44 en mouvement par rapport à la rallonge 46.

Ainsi, en faisant varier l'inclinaison du cadre 44 par rapport à la rallonge 46, il est possible de compenser les variations d'inclinaison du bras 16 de manière à conserver le cadre 44 dans une même position, notamment verticale comme l'illustrent les figures 1A et 1B.

Avantageusement, l'amplitude de la rotation R2 du cadre 44 par rapport à la rallonge 46 est au moins égale à l'amplitude de la rotation du bras 16 par rapport au châssis 20 du véhicule.

Cette rotation R2 du cadre 44 est commandée manuellement.

Ensuite, les moyens de mise en mouvement 34 comprennent aussi un deuxième support 48 intercalé entre le premier support 38 et les moyens de coupe 12.

Et, ce deuxième support 48 est articulé en rotation R3 par rapport à l'extrémité 50 du premier support 38 et autour d'un axe de rotation R4 perpendiculaire au premier axe transversal T1 de translation du premier support 38.

Bien entendu, un actionneur, tel un vérin 52, est prévu pour mettre le deuxième support 48 en rotation par rapport au premier support 38.

Dans un mode de réalisation de l'invention, la rotation R3 du deuxième support 48 par rapport au premier support 38 a une amplitude de 100 degrés.

Cette limitation de la rotation R3 du deuxième support 48 est due à la cinématique employée, mais elle ne pénalise pas la flexibilité de mouvement des moyens de coupe 12.

En effet, les moyens de coupe 12, qui s'étendent le long de l'axe longitudinal L2, sont montés mobiles en rotation R5 sur eux-mêmes par rapport à l'extrémité 54 du deuxième support 48 d'axe longitudinal L4, et de façon que leur axe de rotation R6 soit parallèle, et éventuellement confondu, avec l'axe longitudinal L4 du deuxième support 48 et perpendiculaire à l'axe longitudinal L2 des moyens de coupe 12.

Ensuite, et en raison des connecteurs d'alimentation électrique et/ou hydraulique reliés à la motorisation des moyens de coupe 12, il est prévu des moyens d'arrêt limitant la rotation R5 des moyens de coupe sur eux-mêmes à une amplitude de 300 degrés dans le sens horaire et dans le sens antihoraire.

Ces moyens d'arrêt prennent par exemple la forme de contacteurs de fin de rotation.

De préférence, les moyens de mise en mouvement 34 sont à énergie hydraulique et à commande électrique, comme les moyens de coupe 12.

Aussi, afin de pouvoir fournir une énergie hydraulique suffisante pour alimenter les moyens de mise en mouvement 34 et plus particulièrement les moyens de coupe 12 susceptibles de consommer beaucoup d'énergie hydraulique, il peut être prévu une alimentation hydraulique auxiliaire en plus de l'alimentation hydraulique principale existant déjà sur le véhicule 14.

En raison des variations de longueur du bras 16, un enrouleur hydraulique 56 est prévu sur le bras 16 pour l'alimentation hydraulique, et un enrouleur électrique 58 est prévu sur le bras 16 pour l'alimentation électrique.

Comme illustré en figure 3, grâce à la rotation R3 du deuxième support 48, les moyens de coupe 12 peuvent évoluer entre une position de travail TT1 en surplomb de la végétation, permettant d'élaguer le sommet de la végétation se dirigeant vers les lignes électriques, et une position de travail TT2 légèrement renversée, permettant de dégager par en-dessous la végétation située aux abords des lignes électriques.

Ensuite, et depuis toute position prise entre la position en surplomb et la position légèrement renversée, la rotation R5 sur eux-mêmes des moyens de coupe 12 permet d'effectuer un travail de taille en balayage B1, comme illustré en figure 1B.

En étant combinés aux déplacements du véhicule 14 et aux mouvements du bras 16 télescopique, ces mouvements des moyens de coupe 12 autorisent un travail de taille en continu d'un pan de végétation.

Afin de pouvoir élaguer la végétation aux abords de lignes électriques situées au-dessus de terrains accidentés, comme par exemple en milieu forestier ou au milieu de champs agricoles, les moyens de coupe 12 sont montés par l'intermédiaire du bras 16 sur un véhicule porteur 14 capable de se déplacer sur des terrains accidentés.

La présente invention couvre aussi un véhicule porteur 14 embarquant un dispositif d'élagage 10 tel qu'il vient d'être décrit, les moyens de coupe 12 étant montés par l'intermédiaire du bras 16 sur le véhicule porteur 14.

En conclusion, on constate que le dispositif d'élagage 10 qui vient d'être décrit permet bien à une personne seule de réaliser à distance, et en sécurité, des travaux d'élagage à proximité de lignes électriques, y compris si celles-ci sont toujours sous tension.

## Revendications

1. Dispositif d'élagage (10) comprenant des moyens de coupe (12) de végétation montés par l'intermédiaire d'un bras (16) sur le châssis (20) d'un véhicule (14) d'axe longitudinal (L1), l'extrémité basse (18) du bras (16) est articulée en rotation par rapport au châssis (20) autour d'un axe de rotation (R1), ces moyens de coupe (12) effectuant une taille de la végétation par cisaillement, et des moyens de mise en mouvement (34) étant intercalés entre l'extrémité haute (36) du bras (16) et les moyens de coupe (12), **caractérisé en ce que**, le bras (16) s'étendant le long d'un axe longitudinal (L3), les moyens de mise en mouvement (34) comprennent un premier support (38) mobile en translation le long d'un premier axe transversal (T1) perpendiculaire à l'axe longitudinal (L3) du bras et relié à l'extrémité haute (36) du bras (16).

2. Dispositif d'élagage (10) selon la revendication 1, **caractérisé en ce que** le premier support (38) prend la forme d'une glissière (40) entraînée par un actionneur.

3. Dispositif d'élagage (10) selon la revendication 2, **caractérisé en ce que** le premier support (38) prend la forme d'une double glissière (40-1,40-2) actionnée par deux vérins (42-1,42-2), les deux glissières (40-1,40-2) étant montées en série et entraînées respectivement par les vérins (42-1,42-2).

4. Dispositif d'élagage (10) selon l'une des revendications 1 à 3, **caractérisé en ce que** le premier support (38) est monté mobile en rotation (R2) autour d'un deuxième axe transversal (T2) perpendiculaire à l'axe longitudinal (L3) du bras, le deuxième axe transversal (T2) étant parallèle, mais distinct, par rapport au premier axe transversal (T1).

5. Dispositif d'élagage (10) selon l'une des revendications 1 à 4, **caractérisé en ce que** les moyens de mise en mouvement (34) comprennent un deuxième support (48) intercalé entre le premier support (38) et les moyens de coupe (12), et **en ce que** le deuxième support (48) est articulé en rotation (R3) par rapport à l'extrémité (50) du premier support (38) et autour d'un axe de rotation (R4) perpendiculaire au premier axe transversal (T1) de translation du premier support (38).

6. Dispositif d'élagage (10) selon la revendication 5, **caractérisé en ce que** la rotation (R3) du deuxième support (48) par rapport au premier support (38) a une amplitude de 100 degrés.

7. Dispositif d'élagage (10) selon l'une des revendications 1 à 6, **caractérisé en ce que** les moyens de coupe (12) s'étendent le long d'un axe longitudinal (L2) et sont montés mobiles en rotation (R5) sur eux-mêmes par rapport à l'extrémité (54) du deuxième support (48) d'axe longitudinal (L4), et **en ce que** leur axe de rotation (R6) est parallèle avec l'axe longitudinal (L4) du deuxième support (48) et perpendiculaire à l'axe longitudinal (L2) des moyens de coupe (12).

8. Dispositif d'élagage (10) selon la revendication 7, **caractérisé en ce qu'**il comprend des moyens d'arrêt limitant la rotation (R5) des moyens de coupe sur eux-mêmes à une amplitude de 300 degrés dans le sens horaire et dans le sens antihoraire.

9. Dispositif d'élagage (10) selon l'une des revendications 1 à 8, **caractérisé en ce que** le bras (16) est télescopique.

10. Dispositif d'élagage selon l'une des revendications 1 à 9, **caractérisé en ce que** l'axe de rotation (R1) du bras (16) est perpendiculaire à l'axe longitudinal (L1) du véhicule (14).

11. Dispositif d'élagage (10) selon l'une des revendications 1 à 10, **caractérisé en ce que** les moyens de coupe (12) prennent la forme de deux lames planes (26,28) superposées le long d'un axe longitudinal (L2) et avec un mouvement relatif et alternatif de l'une par rapport à l'autre.

12. Dispositif d'élagage (10) selon la revendication 11, **caractérisé en ce que** chaque lame plane (26,28) comporte respectivement deux séries ((S1,S2),(S3,S4)) de dents (30), les deux séries ((S1,S2),(S3,S4)) de chaque lame plane (26,28) étant adossées l'une à l'autre, les dents (30) vers l'extérieur.

13. Dispositif d'élagage (10) selon l'une des revendications 1 à 12, **caractérisé en ce que** les moyens de coupe (12) sont montés par l'intermédiaire du bras (16) sur un véhicule porteur (14) capable de se déplacer sur des terrains accidentés.

14. Véhicule porteur (14) embarquant un dispositif d'élagage (10) selon l'une des revendications précédentes, les moyens de coupe (12) étant montés par l'intermédiaire du bras (16) sur le véhicule porteur (14).

## Patentansprüche

1. Ausästungsvorrichtung (10) mit zum Schneiden von Vegetation vorgesehenen Schneidemitteln (12), die mittels eines Arms (16) auf dem Fahrgestell (20) eines Fahrzeugs (14) mit einer Längachse (L1) montiert sind, wobei das untere Ende (18) des Arms (16) bezüglich des Fahrgestells (20) um eine Drehachse (R1) drehbar gelagert ist, wobei die Schneidemittel (12) einen Schnitt der Vegetation durch Abscheren bewerkstelligen und wobei Bewegungsmittel (34) zwischen dem oberen Ende (36) des Arms (16) und den Schneidemitteln (12) angeordnet sind, **dadurch gekennzeichnet, dass** sich der Arm (16) entlang einer Längsachse (L3) erstreckt und die Bewegungsmittel (34) eine erste Halterung (38) aufweisen, die in einer Translationsrichtung entlang einer im rechten Winkel zur Längsachse (L3) angeordneten ersten Querachse (T1) beweglich ist und die mit dem oberen Ende (36) des Arms (16) verbunden ist.

2. Ausästungsvorrichtung (10) nach Anspruch 1, **dadurch gekennzeichnet, dass** die erste Halterung (38) als Gleitführung (40) ausgebildet ist, die von einem Betätigungsgerät angetrieben ist.

3. Ausästungsvorrichtung (10) nach Anspruch 2, **dadurch gekennzeichnet, dass** die erste Halterung (38) als doppelte Gleitführung (40-1, 40-2) ausgebildet ist, die von zwei Gewindespindeln (42-1, 42-2) betätigt ist, wobei die beiden Gleitvorrichtungen (40-1, 40-2) in Reihe angeordnet und jeweils durch die Gewindespindeln (42-1, 42-2) angetrieben sind.

4. Ausästungsvorrichtung (10) nach einem der Ansprüche 1 bis 3, **dadurch gekennzeichnet, dass** die erste Halterung (38) für das Ausführen einer Drehung (R2) um eine bezüglich der Längsachse (L3) des Arms im rechten Winkel angeordnete zweite Querachse (T2) beweglich montiert ist, wobei die zweite Querachse (T2) parallel zu, aber verschieden von der ersten Querachse (T1) ist.

5. Ausästungsvorrichtung (10) nach einem der Ansprüche 1 bis 4, **dadurch gekennzeichnet, dass** die Bewegungsmittel (34) eine zweite Halterung (48) aufweisen, die zwischen der ersten Halterung (38) und den Schneidemitteln (12) angeordnet ist, und dass die zweite Halterung (48) für das Ausführen einer Drehung (R3) bezüglich des Endes (50) der ersten Halterung (38) und um eine Drehachse (R4) drehbar gelagert ist, die im rechten Winkel zur ersten Querachse (T1) für die Translation der ersten Halterung (38) angeordnet ist.

6. Ausästungsvorrichtung (10) nach Anspruch 5, **dadurch gekennzeichnet, dass** die Drehung (R3) der zweiten Halterung (48) bezüglich der ersten Halterung (38) einen Drehbereich von 100 Grad aufweist.

7. Ausästungsvorrichtung (10) nach einem der Ansprüche 1 bis 6, **dadurch gekennzeichnet, dass** sich die Schneidemittel (12) entlang einer Längsachse (L2) erstrecken und für das Ausführen einer Drehung (R5) um sich selbst bezüglich des Endes (54) der zweiten Halterung (48) mit Längsachse (L4) beweglich montiert sind, und dass deren Drehachse (R6) zur Längsachse (L4) der zweiten Halterung (48) parallel und im rechten Winkel zur Längsachse (L2) der Schneidemittel (12) ausgerichtet ist.

8. Ausästungsvorrichtung (10) nach Anspruch 7, **dadurch gekennzeichnet, dass** diese Anhaltmittel aufweist, die die Drehung (R5) der Schneidemittel um sich selbst auf einen Drehbereich von 300 Grad im Uhrzeigersinn und entgegen dem Uhrzeigersinn begrenzen.

9. Ausästungsvorrichtung (10) nach einem der Ansprüche 1 bis 8, **dadurch gekennzeichnet, dass** der Arm (16) ein Teleskoparm ist.

10. Ausästungsvorrichtung nach einem der Ansprüche 1 bis 9, **dadurch gekennzeichnet, dass** die Drehachse (R1) des Arms (16) im rechten Winkel zur Längsachse (L1) des Fahrzeugs (14) ausgerichtet ist.

11. Ausästungsvorrichtung (10) nach einem der Ansprüche 1 bis 10, **dadurch gekennzeichnet, dass** die Schneidemittel (12) als zwei flache Klingen (26, 28) ausgestaltet sind, die entlang der Längsachse (L2) übereinander angeordnet sind und die eine relative und wechselnde Bewegung untereinander ausführen.

12. Ausästungsvorrichtung (10) nach Anspruch 11, **dadurch gekennzeichnet, dass** jede flache Klinge (26, 28) jeweils zwei Reihen ((S1, S2), (S3, S4)) von Zähnen (30) aufweisen, wobei die beiden Reihen ((S1, S2), (S3, S4)) von jeder flachen Klinge (26, 28) nebeneinander mit nach außen weisenden Zähnen (30) angeordnet sind.

13. Ausästungsvorrichtung (10) nach einem der Ansprüche 1 bis 12, **dadurch gekennzeichnet, dass** die Schneidemittel (12) mittels des Arms (16) auf einem Trägerfahrzeug (14) montiert sind, das in der Lage ist, sich im freien Gelände zu bewegen.

14. Trägerfahrzeug (14) das eine Ausästungsvorrichtung (10) nach einem der vorhergehenden Ansprüche hält, wobei die Schneidemittel (12) mittels eines Arms (16) auf dem Trägerfahrzeug (14) montiert sind.

## Claims

1. A pruning device (10) comprising vegetation cutting means (12) mounted by means of an arm (16) on the chassis (20) of a vehicle (14) having a longitudinal axis (L1), the bottom end (18) of the arm (16) is rotatably articulated with respect to the chassis (20) about a rotation axis (R1), the cutting means (12) effecting a cutting of the vegetation by shearing, and movement means (34) being interposed between the top end (36) of the arm (16) and the cutting means (12), **characterised in that**, the arm (16) extending along a longitudinal axis (L3), the movement means (34) comprises a first support (38) able to move in translation along a first transverse axis (T1) perpendicular to the longitudinal axis (L3) of the arm and connected to the top end (36) of the arm (16).

2. A pruning device (10) according to claim 1, **characterised in that** the first support (38) takes the form of a runner (40) driven by an actuator.

3. A pruning device (10) according to claim 2, **characterised in that** the first support (38) takes the form of a double runner (40-1, 40-2) actuated by two jacks (42-1, 42-2), the two runners (40-1, 40-2) being mounted in series and driven respectively by the jacks (42-1, 42-2).

4. A pruning device (10) according to one of claims 1 to 3, **characterised in that** the first support (38) is mounted so as to be able to move in rotation (R2) about a second transverse axis (T2) perpendicular to the longitudinal axis (L3) of the arm, the second transverse axis (T2) being parallel to, but distinct from, the first transverse axis (T1).

5. A pruning device (10) according to one of claims 1 to 4, **characterised in that** the movement means (34) comprises a second support (48) interposed between the first support (38) and the cutting means (12), and **in that** the second support (48) is rotatably articulated (R3) with respect to the end (50) of the first support (38) and about a rotation axis (R4) perpendicular to the first transverse axis (T1) for translation of the first support (38).

6. A pruning device (10) according to claim 5, **characterised in that** the rotation (R3) of the second support (48) with respect to the first support (38) has an amplitude of 100 degrees.

7. A pruning device (10) according to one of claims 1 to 6, **characterised in that** the cutting means (12) extends along a longitudinal axis (L2) and is mounted so as to be able to move in rotation (R5) on itself with respect to the end (54) of the second support (48) of longitudinal axis (L4), and **in that** its rotation axis (R6) is parallel to the longitudinal axis (L4) of the second support (48) and perpendicular to the longitudinal axis (L2) of the cutting means (12).

8. A pruning device (10) according to claim 7, **characterised in that** it comprises stop means limiting the rotation (R5) of the cutting means on itself to an amplitude of 300 degrees in the clockwise direction and in the anticlockwise direction.

9. A pruning device (10) according to one of claims 1 to 8, **characterised in that** the arm (16) is telescopic.

10. A pruning device according to one of claims 1 to 9, **characterised in that** the rotation axis (R1) of the arm (16) is perpendicular to the longitudinal axis (L1) of the vehicle (14).

11. A pruning device (10) according to one of claims 1 to 10, **characterised in that** the cutting means (12) takes the form of two flat blades (26, 28) superimposed along a longitudinal axis (L2) and with a relative and alternating movement with respect to each other.

12. A pruning device (10) according to claim 11, **characterised in that** each flat blade (26, 28) comprises respectively two series ((S1, S2), (S3, S4)) of teeth (30), the two series ((S1, S2), (S3, S4)) of each flat blade (26, 28) being up against each other, with the teeth (30) outwards.

13. A pruning device (10) according to one of claims 1 to 12, **characterised in that** the cutting means (12) are mounted by means of the arm (16) on a carrier vehicle (14) capable of moving on uneven terrain.

14. A carrier vehicle (14) carrying a pruning device (10) according to one of the preceding claims, the cutting means (12) being mounted by means of the arm (16) on the carrier vehicle (14).
